(19) Europäisches Patentamt / European Patent Office / Office européen des brevets

(11) **EP 3 715 172 B1**

(12) **FASCICULE DE BREVET EUROPÉEN**

(45) Date de publication et mention de la délivrance du brevet:
**21.07.2021 Bulletin 2021/29**

(51) Int Cl.:
***B60M 3/02*** *(2006.01)*

(21) Numéro de dépôt: **20165102.3**

(22) Date de dépôt: **24.03.2020**

(54) **PROCÉDÉ D'ADAPTATION DYNAMIQUE DU FONCTIONNEMENT D'AU MOINS UNE SOUS-STATION DE TRACTION D'UN SYSTÈME D'ALIMENTATION EN PUISSANCE ÉLECTRIQUE DE VÉHICULES FERROVIAIRES, PROGRAMME D'ORDINATEUR ET DISPOSITIF ASSOCIÉ**

DYNAMISCHES ANPASSUNGSVERFAHREN FÜR DEN BETRIEB MINDESTENS EINES UNTERWERKS EINES STROMVERSORGUNGSSYSTEMS FÜR SCHIENENFAHRZEUGE, COMPUTERPROGRAMM UND ENTSPRECHENDE VORRICHTUNG

METHOD FOR DYNAMICALLY ADAPTING THE OPERATION OF AT LEAST ONE TRACTION SUBSTATION OF A SYSTEM FOR SUPPLYING ELECTRICAL POWER TO RAILWAY VEHICLES, CORRESPONDING COMPUTER PROGRAM AND ASSOCIATED DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.03.2019 FR 1903081**

(43) Date de publication de la demande:
**30.09.2020 Bulletin 2020/40**

(73) Titulaire: **ALSTOM Transport Technologies 93400 Saint-Ouen (FR)**

(72) Inventeur: **AUTHIE, Pierre 78170 LA CELLE SAINT CLOUD (FR)**

(74) Mandataire: **Lavoix 2, place d'Estienne d'Orves 75441 Paris Cedex 09 (FR)**

(56) Documents cités:
**EP-A1- 3 352 327      WO-A1-00/21777
WO-A1-01/47742      US-A1- 2015 027 838**

**Description**

La présente invention concerne un procédé d'adaptation dynamique du fonctionnement d'au moins une sous-station de traction d'un ensemble de sous-station(s) de traction d'un système d'alimentation en puissance électrique de véhicules électriques, chaque sous-station étant adaptée pour transférer une puissance électrique à une ligne d'alimentation en courant continu via un signal d'alimentation ayant une tension commandée par la sous-station en fonction d'un paramètre de tension, la ligne d'alimentation étant disposée le long d'une voie et un ensemble de véhicule(s) circulant sur ladite voie, chaque sous-station étant respectivement associée à un tronçon de la voie correspondant à sa zone de service en alimentation.

Par exemple, le document EP 1 985 490 A1 décrit un tel système d'alimentation en puissance électrique de véhicules ferroviaires à partir de sous-stations de traction.

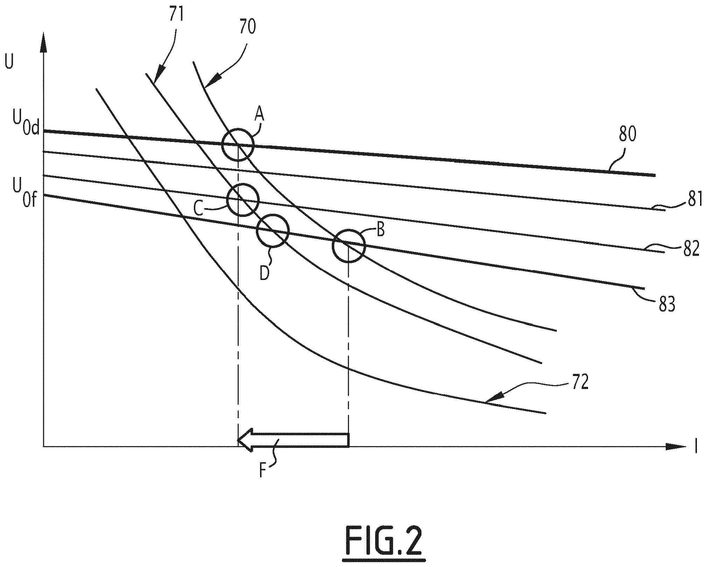

Le comportement en courant I et tension U d'une sous-station est représenté par une droite caractéristique de sortie, qui dépend du niveau de tension à vide (en anglais « no load voltage ») initialement choisi. La tension à vide correspond à la tension pour I = 0 : cf. chacune des droites caractéristiques de sortie est référencée 80 à 83 en figure 2.

La pente de la droite représente la résistance électrique de la sous-station. Comme toute source physique, la sous-station voit diminuer sa tension de sortie lorsque sa charge augmente. Ainsi la pente représente la chute de tension en fonction du courant qui circule au niveau de l'infrastructure.

Dans le cas d'une sous-station classique, la tension à vide $U_0$ est fixe au cours du fonctionnement opérationnel et est égale à une valeur déterminée au moment de la conception ou du réaménagement du système d'alimentation. Le point de fonctionnement sur la droite caractéristique varie constamment en pratique en fonction de la charge de la sous-station, c'est-à-dire du nombre de trains alimentés et de leur mouvement (accélération, freinage, etc.).

Le courant délivré par une sous-station se retrouve dans les conducteurs d'alimentation (caténaire ou 3ème rail) et c'est là que se matérialisent les pertes par effet Joule. En supposant dans un premier temps que la puissance appelée à *un instant donné* par l'ensemble des trains pour leur déplacement ne varie pas avec la tension, on a dans le principe une hyperbole (produit U.I constant) dans le diagramme d'axes U, I : cf. par exemple les courbes 70, 71 et 72. Et le point de fonctionnement de la sous-station est donné par l'intersection de l'hyperbole (par exemple la courbe 70) avec la droite caractéristique de la sous-station (par exemple la droite 83).

Il est connu de chercher à fixer une valeur haute de tension à vide des sous-stations pour améliorer les performances pour améliorer les chutes de tension des sous-stations vers les trains. Toutefois, augmenter la tension à vide des sous-stations a également pour effet de pénaliser l'échange de puissance entre trains et/ou entre un train et une sous-station, entre la régénération (i.e. due au freinage de trains) et la consommation. En effet, les trains en freinage et les sous-stations sont des sources d'alimentation dans le système électrique. Et ils se retrouvent en quelque sorte en concurrence. Selon les principes de la physique, c'est la source qui a la tension à vide la plus forte qui fournit le plus de puissance. Donc en augmentant la tension à vide des sous-stations, on diminue la part de la puissance délivrée par les trains en freinage aux autres trains et/ou à une des sous-stations ; davantage de puissance de freinage est alors perdue en chaleur puisqu'elle n'a pas pu être échangée et davantage de puissance doit donc être fournie par les sous-stations.

Le document US 2015/027838 A1 décrit aussi un dispositif et système de commande d'une tension d'alimentation à courant continu. Le but de l'invention est alors de contribuer à améliorer cette situation.

A cet effet, suivant un premier aspect, l'invention propose un procédé d'adaptation dynamique du fonctionnement d'au moins une sous-station de traction du type précité caractérisé en ce que le procédé comporte les étapes suivantes :

- détermination des véhicules circulant actuellement dans le tronçon spécifiquement associé à ladite sous-station ;
- détermination de la tension d'alimentation courante, à leur point de raccordement à la ligne d'alimentation, de chacun desdits véhicules déterminés dans le tronçon ;
- détermination d'une valeur actualisée du paramètre de tension de ladite sous-station en fonction de ladite tension d'alimentation déterminée de chacun desdits véhicules actuellement localisés dans le tronçon respectif associé à ladite sous-station ;
- commande de réglage à ladite valeur actualisée ainsi déterminée du paramètre de tension de ladite sous-station.

L'invention permet ainsi d'accroître de façon dynamique la valeur de la tension à vide des sous-stations (et donc la caractéristique courant/tension de chaque sous-station considérée) seulement à l'endroit de la voie et pendant le temps que cela est nécessaire, notamment quand la régénération de puissance électrique dans le tronçon n'est pas suffisante pour maintenir la tension d'alimentation.

Cette optimisation dynamique de la tension à vide permet de diminuer de façon optimisée la valeur du courant générant des pertes par effet joule au niveau de l'infrastructure.

Dans des modes de réalisation, le procédé d'adaptation dynamique du fonctionnement d'au moins une sous-station de traction suivant l'invention comporte en outre une ou plusieurs des caractéristiques suivantes :

- le tronçon de voie associée à ladite sous-station est le tronçon ayant pour extrémités un premier point d'extrémité et un second point d'extrémité, tel que :

   le premier point d'extrémité est le point de raccordement électrique à la ligne d'alimentation de la sous-station voisine la plus proche de ladite sous-station selon un sens le long de ladite voie et
   le second point d'extrémité est le point de raccordement électrique à la ligne d'alimentation de la sous-station voisine la plus proche de ladite sous-station selon le sens opposé le long de ladite voie s'il existe ou sinon une extrémité de la voie ;

- la valeur actualisée du paramètre de tension de ladite sous-station est déterminée en fonction de la différence, pour chacun desdits véhicules actuellement localisés dans le tronçon respectif associé à ladite sous-station, entre une valeur seuil de tension déclenchant une augmentation du paramètre de tension de ladite station et ladite tension d'alimentation courante dudit véhicule ;
- ledit paramètre de tension correspond à la tension à vide ;
- la valeur actualisée du paramètre de tension de ladite sous-station est déterminée à l'aide de la formule suivante :
   $U0 = U00 + C.\Sigma_{i=1 \text{ à } n} \, pos(Uth - Utr,i)$ où :

   $U0$ est la valeur actualisée du paramètre de tension déterminée ;
   $U00$ et $C$ sont deux valeurs constantes ;
   $n$ est le nombre de véhicules localisés au sein du tronçon associé à ladite sous-station ;
   $pos(Uth - Utr,i) = 0$ si $Uth - Utr,i$ est négatif, et $pos(Uth - Utr,i) = Uth - Utr,i$ sinon ;
   $Uth$ est une valeur constante ;
   $Utr,i$ est la valeur courante de tension d'alimentation courante à son point de raccordement à la ligne d'alimentation, du ième véhicule, $i = 1$ à $n$, localisé au sein du tronçon associé à ladite sous-station.

Suivant un deuxième aspect, la présente invention propose un programme d'ordinateur comportant des instructions logicielles qui, lorsqu'elles sont exécutées par un ordinateur, mettent en œuvre un procédé tel que défini ci-dessus.

Suivant un troisième aspect, la présente invention propose un dispositif dynamique du fonctionnement d'au moins une sous-station de traction d'un ensemble de sous-station(s) de traction d'un système d'alimentation en puissance électrique de véhicules électriques, ladite sous-station étant adaptée pour transférer une puissance électrique à une ligne d'alimentation en courant continu via un signal d'alimentation ayant une tension commandé par la sous-station en fonction d'un paramètre de tension et étant respectivement associée à un tronçon de la voie correspondant à sa zone de service en alimentation , ledit dispositif d'adaptation étant caractérisé en ce qu'il est adapté pour déterminer les véhicules circulant actuellement dans le tronçon spécifiquement associé à ladite sous-station, pour déterminer la tension d'alimentation courante, à leur point de raccordement à la ligne d'alimentation, de chacun desdits véhicules déterminés dans le tronçon ; pour déterminer une valeur actualisée du paramètre de tension de ladite sous-station en fonction de ladite tension d'alimentation déterminée de chacun desdits véhicules actuellement localisés dans le tronçon respectif associé à ladite sous-station et pour commander un réglage à ladite valeur actualisée ainsi déterminée du paramètre de tension de ladite sous-station.

Ces caractéristiques et avantages de l'invention apparaîtront à la lecture de la description qui va suivre, donnée uniquement à titre d'exemple, et faite en référence aux dessins annexés, sur lesquels :

   [Fig 1] la figure 1 est une représentation schématique d'un réseau ferroviaire équipé d'un système d'alimentation comportant une pluralité de sous-stations dans un mode de réalisation de l'invention ;
   [Fig 2] la figure 2 est un graphe représentant différentes caractéristiques courant/tension dans un mode de réalisation de l'invention ;
   [Fig 3] la figure 3 est un organigramme d'étapes mises en œuvre dans un mode de réalisation de l'invention.

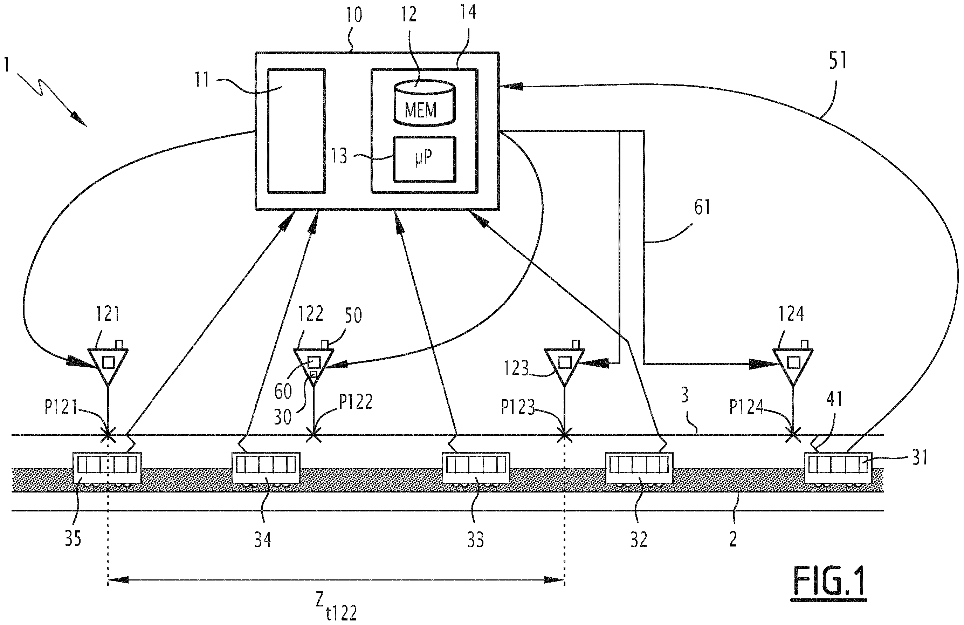

La figure 1 représente un réseau ferroviaire équipé d'un système 1 d'alimentation.

Le système d'alimentation 1 se situe par exemple à l'interface entre un réseau de fourniture de courant (non représenté) et une ligne 3 d'alimentation qui est disposée le long d'une voie 2 de circulation de véhicules électriques, dans l'exemple considéré, des véhicules ferroviaires, tels les véhicules 31, 32, 33, 34, 35. Ceux-ci sont raccordés électriquement à la ligne 3, de façon classique, par exemple par l'intermédiaire de leur pantographe (référencé 41 pour le véhicule 31).

On entend par ligne d'alimentation tout moyen de transport d'énergie électrique permettant d'alimenter électriquement le véhicule tel qu'un rail d'alimentation ou une caténaire.

Le réseau de fourniture de courant est par exemple un réseau propre à délivrer une tension alternative Vn qui est une haute tension alternative triphasée. Par haute tension alternative, on désigne ici une tension alternative comprise entre 1 000 et 50 000 V AC. Conformément à l'enseignement de la demande de brevet FR 28 73 332, ce réseau peut également être un réseau de basse tension alternative triphasée. Ici, par basse tension alternative triphasée, on désigne une tension inférieure à 1 000 V AC. Typiquement, ce réseau de basse tension alternative triphasée sera alors un réseau de basse tension dont la tension alternative est comprise entre 400 et 1 000 V AC.

La tension nominale sur la ligne 3 est une tension continue dont la valeur nominale Uc_nom est de 750, 1500, ou 3000 V DC et dont les variations autour de Uc_nom sont comprises entre Uc_min et Uc_max, comme spécifié dans la norme européenne IEC60850/EN 50163.

Le système d'alimentation 1 comporte une pluralité de sous-stations de traction, par exemple identiques les unes aux autres, réparties à intervalles réguliers le long de la ligne 3. Pour simplifier la figure 1, seules quatre sous-stations 121, 122, 123, 124 ont été représentées et sont considérées ci-après, mais suivant les modes de réalisation, leur nombre n peut être quelconque, n étant supérieur ou égal à 1, par exemple n est supérieur à 10.

Les sous-stations 121 à 124 sont électriquement raccordées au réseau de fourniture de courant.

Chaque sous-station k, k= 121 à 124, est électriquement raccordée à la ligne 3 en un point Pk de raccordement. Le point Pk est séparé du point Pk+1 et du point Pk-1 par une distance Dk. Cette distance Dk est généralement supérieure à plusieurs centaines de mètres, mais dans tous les cas suffisamment courte pour que la sous-station k puisse alimenter en traction un véhicule dont le pantographe est situé au niveau du point Pk+1, alors que la sous-station Sk+1 est inactive.

Ici la distance Dk est comprise entre 1000 et 2000 m pour une tension nominale UC_nom de 750 V DC et peut aller jusqu'à 20 km pour une tension nominale UC_nom de 3000 V DC.

Par alimentation en traction, on désigne le fait qu'une sous-station k génère sur la ligne 3 suffisamment de puissance pour alimenter les moteurs de traction de ceux des véhicules 31 à 35 localisés dans une zone Ztk d'alimentation en traction qui lui est respectivement associée.

Dans le mode de réalisation considéré, la zone d'alimentation Ztk considérée de la sous-station K, k = 121 à 124 est le segment d'extrémités Pk-1 et Pk+1 (on notera que quand la sous-station est la dernière sous-station sur la voie dans un des sens de circulation, une des extrémités de la zone d'alimentation est alors l'extrémité de la voie).

Dans le mode de réalisation considéré, la sous-station k comporte un convertisseur quatre quadrants raccordé, d'un côté, au réseau 20 et, de l'autre, au point Pk sur la ligne 3. Ce convertisseur est apte à redresser la tension triphasée du réseau 20 pour délivrer sur la ligne 3 une tension continue redressée comprise entre Uc_min et Uc_max.

Dans un mode de réalisation, le convertisseur est, par exemple, formé d'un pont bidirectionnel commandé réalisé à partir de transistors de puissance tels que des transistors IGBT (Insulated Gate Bipolar Transistor). Le pont commandé permet de générer, en mode redresseur, une tension d'alimentation de la ligne 3 présentant une caractéristique de sortie sous forme de droite avec une faible pente en fonction du courant débité.

Dans le mode de réalisation considéré, chaque sous-station k, k=121 à 124 est équipée d'un bloc de télécommunication (référencé 50 pour la sous-station 122) adapté pour échanger des données avec un bloc de télécommunication 11 d'une unité de contrôle 10 propre à contrôler le système d'alimentation 1. Dans le mode de réalisation considéré, les télécommunications ainsi mises en œuvre sont des télécommunications radiofréquences.

Dans le mode de réalisation considéré, chaque sous-station k comporte une unité de commande (référencé 60 pour la sous-station 122) propre à déclencher une modification de sa tension à vide -encore appelée *paramètre de tension*- sur réception d'une commande correspondante.

Le système d'alimentation 1 comprend en outre l'unité de contrôle 10. L'unité de contrôle 10 comprend le bloc de télécommunication 11 et un bloc de traitement 14.

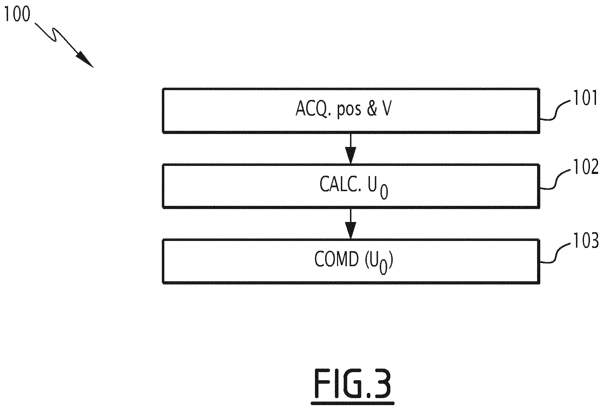

Le bloc de traitement 14, dans le mode de réalisation considéré, comprend une mémoire 12 et un microprocesseur 13 ; la mémoire 12 stocke des instructions logicielles qui, lorsqu'elles sont exécutées sur le microprocesseur 13, mettent en œuvre les opérations décrites en figure 3 et incombant au bloc de traitement 14.

La mémoire 12 stocke en outre la position sur la voie de chaque point Pk.

Dans le mode de réalisation considéré, les trains 31 à 35 sont chacun équipés d'un bloc de télécommunication (non représenté) adapté pour échanger des données avec le bloc de télécommunication 11. Dans un mode de réalisation, ces télécommunications mises en œuvre sont des télécommunications radiofréquences.

Dans d'autres modes de réalisation, les télécommunications entre le bloc de télécommunication 11 de l'unité de contrôle 10 avec les blocs de télécommunication des trains seront de type radiofréquence tandis que les télécommunications entre le bloc de télécommunication 11 de l'unité de contrôle 10 avec les blocs de télécommunication des sous-stations seront de type filaire, ou encore les sous-stations jouant le rôle de relais entre l'unité de contrôle 10 et les trains, toutes les communications sont de type filaire entre l'unité de contrôle 10 et les sous-stations et de type radiofréquence entre les sous-stations et les trains.

Dans le mode de réalisation considéré, les trains 31 à 34 comportent en outre un capteur de tension et un capteur de position (non représentés). Le capteur de tension embarqué sur un train est adapté pour mesurer la tension d'alimentation courante au niveau du point de raccordement électrique (i.e. au niveau du pantographe) entre le train et la ligne d'alimentation 3. Le capteur de position embarqué dans un train est par exemple un module GPS adapté pour déterminer la position courante du train. Ces capteurs sont adaptés pour transmettre en temps réel, par exemple toutes les t secondes (avec t compris dans la plage [0.2 2], l'un, la tension d'alimentation courante, et l'autre, la position du train au bloc de télécommunication 11 de l'unité de contrôle 10, via une liaison de télécommunication établie entre un bloc de télécommunication du train et le bloc de télécommunication de l'unité de contrôle 10 (cf. en figure 1, la liaison 51 pour le train 41).

Les étapes d'un procédé 100 représentées en figure 3 sont mises en œuvre dans un mode de réalisation de l'invention.

Le procédé 100 est exécuté périodiquement, par exemple toutes les s secondes avec s compris dans la plage [0.5 - 2].

Dans une étape 101, chaque train 31 à 35 circulant sur la voie 3 transmet à destination du bloc de télécommunication 11 de l'unité de contrôle 10 la valeur courante de sa tension d'alimentation au pantographe ainsi que ses données GPS indiquant sa localisation courante. Ces informations sont fournies en temps réel au bloc de traitement 14.

Dans une étape 102, dès réception de ces informations, pour chaque sous-station k sur la voie 3, k= 121 à 124, le bloc de traitement 14 détermine en fonction de la position des trains (vis-à-vis de la zone d'alimentation de la sous-station k telles que définie dans le cas considéré par la position des points Pk en mémoire 12) et des tensions d'alimentation courantes de ces trains telles que reçues, une valeur actualisée de tension à vide de la sous-station.

Dans un mode de réalisation, la valeur actualisée de la tension à vide de la sous-station k est déterminée en fonction de la différence, pour chacun desdits trains actuellement localisés dans la zone d'alimentation Ztk respectivement associée à la sous-station, entre une valeur seuil de tension déclenchant une augmentation de la tension à vide de ladite station et ladite tension d'alimentation courante dudit train.

Dans un mode de réalisation, la valeur actualisée de la tension à vide $U_{0k}$ pour la sous-station k est plus précisément déterminée à l'aide de la formule ci-dessous :

$$U_{0k} = U_{00k} + C.\Sigma_{i=1 \text{ à } n} \text{pos}(U_{th} - U_{tr,i}) \qquad \text{(formule 1)}$$

où

$U_{0k}$ est la valeur actualisée de tension à vide déterminée ;

$U_{00k}$ est une constante égale à la tension de charge par défaut de la sous-station concernée (peut correspondre à la valeur fixe de tension à vide utilisée dans l'art antérieur) ;

C est une constante, déterminée par exemple par simulation ou par tests sur site ; elle peut prendre la même valeur indépendamment des sous-stations ou varier selon les sous-stations ;

n est le nombre de trains localisés au sein de la zone d'alimentation Ztk associée à ladite sous-station k (par exemple, dans la situation représentée en figure 1; pour la sous-station k = 122, associée à la zone Zt122 correspondant au tronçon de voie entre P121 et P123, n = 3) ;

$U_{th}$ est une valeur constante, elle est la valeur seuil déclenchant l'augmentation de la tension à vide de la sous-station k, déterminée par exemple par simulation ou par tests sur site ; elle peut prendre la même valeur indépendamment des sous-stations ou varier selon les sous-stations;

$U_{tr,i}$ est la valeur courante de tension d'alimentation courante à son point de raccordement à la ligne d'alimentation, du ième train, i = 1 à n, localisé au sein de la zone d'alimentation Ztk associée à ladite sous-station ;

pos $(U_{th} - U_{tr,i}) = 0$ si $U_{th} - U_{tr,i}$ est négatif, et pos $(U_{th} - U_{tr,i}) = U_{th} - U_{tr,i}$ sinon.

La formule (1) permet ainsi d'augmenter quand c'est nécessaire la valeur de tension à vide à partir de $U_{00k}$ en tenant compte de la tension de chaque train, notamment de celui qui voit sa tension baisser le plus significativement, mais aussi de celui en mode freinage dont la tension augmente. Cette formule permet de déterminer la tension à vide correspondant à un compromis satisfaisant entre maximiser la récupération et minimiser les pertes par effet Joule.

Cette formule (1) réalise un contrôle en boucle ouverte.

On veillera en outre à ce que la tension à vide de chaque sous-station reste bien inférieure à Uc_max conformément à IEC60850/EN 50163.

Avantageusement, d'autres calculs pour déterminer les valeurs de tensions à vide actualisées des sous-stations peuvent être utilisés.

Toutefois ces formules doivent respecter le principe d'augmenter la tension à vide quand la tension des trains baisse.

Dans une étape 103, le bloc de traitement 14 transmet une commande 61 à chaque sous-station k, via le bloc de télécommunication 11 commandant le remplacement de la valeur de tension à vide pour la sous-station k par la valeur actualisée calculée à l'étape 102.

L'unité de commande de la sous-station k reçoit alors, via le bloc de télécommunication de la sous-station, la commande 61 qui lui est destinée et déclenche en temps réel le changement de tension à vide : par exemple, dans le cas d'une technologie IGBT, la nouvelle valeur est téléchargée dans la mémoire du contrôleur du convertisseur ; dans le cas d'une technologie de redressement à diodes, une boucle de régulation incluant un régleur en charge sur le transformateur associé est utilisée.

La présente invention permet ainsi en adaptant dynamiquement la tension à vide des sous-stations, de réduire les pertes de puissance, ce qui permet une diminution du dimensionnement de la sous-station (transformateur, convertisseur etc).

A titre d'illustration des effets de l'invention, il est fait référence à la figure 2 représentant des courbes de tension, en ordonnée, en fonction du courant, en abscisse.

La courbe 83 correspond à la droite des caractéristiques U, I de l'état de la technique où la tension à vide est fixe. Par exemple, $U_{00k}$ a été choisie égale à $U_{0f}$, pour k = 121 à 124.

A titre d'exemple, supposons que l'unité de contrôle 10 détermine que 3 trains sont présents dans la zone d'alimentation d'une sous-station, et supposons que ces 3 trains fractionnent (i.e. pas de freinage).

Dans le cas d'une tension à vide de départ correspondant à celle d'une sous-station classique de l'art antérieur ($U_{00k}=U_{0f}$), le point de fonctionnement sera le point B (intersection entre la courbe 70 de puissance fournie par la sous-station et la droite 83 caractéristique de la sous-station).

La mise en œuvre de l'invention va faire en sorte d'augmenter dynamiquement la tension à vide depuis U0f à une valeur plus élevée U0d (sans dépasser la valeur maximale permise) depuis le point B pour aller chercher un second point de fonctionnement, par exemple le point A, correspondant à l'intersection entre la même courbe de puissance 70 et la droite U/I correspondant à une tension à vide plus élevée). On comprend alors que la puissance fournie est identique pour la sous-station, mais que le courant qui circule est plus faible (flèche F en figure 2). Cela se traduit par des pertes par effet joule réduites au niveau de l'infrastructure.

A titre d'autre exemple, supposons cette fois que sur les 3 trains dans la zone d'alimentation de la sous-station, 2 trains fractionnent et un train freine.

L'invention a également pour objectif de permettre un maximum de récupération d'énergie d'un train qui freine. Or, en augmentant la tension à vide U0, on va plutôt soutirer de la puissance de la sous-station plutôt que d'utiliser l'énergie de freinage. Il faut donc trouver un compromis entre la tension initiale U0f (courbe 83) et la tension à vide U0d dynamique maximale (courbe 80), figuré par une droite intermédiaire (droite 81, 82 par exemple). Ainsi, on va se déplacer sur une courbe d'iso puissance (située en-dessous de la courbe précédente 70 puisque la puissance à fournir par la sous-station a diminué) en essayant de régler la valeur de tension à vide pour que le courant transitant depuis la sous-station soit minimisé. C'est-à-dire passage du point D (intersection des courbes 71 et 83) au point C (intersection courbes 71 et 82). S'il n'y avait pas de récupération d'énergie (régénération), on irait chercher la valeur de U0d correspondant à la droite 80, mais comme il y a une phase de récupération d'énergie, on ne peut pas maximiser la tension à vide.

Ainsi la valeur de tension à vide selon l'invention correspond au compromis permettant de maximiser la récupération d'énergie par freinage tout en minimisant les pertes par effet joule au niveau de l'infrastructure.

Dans un autre mode de réalisation, le bloc de traitement 14 est réalisé sous forme d'un composant logique programmable, tel qu'un FPGA (de l'anglais *Field Programmable Gate Array),* ou encore sous forme d'un circuit intégré dédié, tel qu'un ASIC (de l'anglais *Applications Specific Integrated Circuit*).

Dans un mode de réalisation, les opérations décrites ci-dessus comme réalisées depuis une unité de contrôle 10 centralisée peuvent à la place être réalisées de manière répartie, par exemple chaque sous-station (ou certaines d'entre elles) peut comprendre un module de calcul similaire à l'unité de contrôle 10 pour déterminer les valeurs actualisées de sa tension à vide.

On notera qu'un exemple de réalisation a été décrit ci-dessus en référence à des véhicules ferroviaires ; cependant l'invention est bien sûr applicable à tout type de véhicule électrique, tel par exemple qu'une voiture alimentée par un rail au sol.

## Revendications

1. Procédé d'adaptation dynamique du fonctionnement d'au moins une sous-station (121, 122) de traction d'un ensemble de sous-station(s) de traction d'un système d'alimentation en puissance électrique (1) de véhicules électriques, chaque sous-station étant adaptée pour transférer une puissance électrique à une ligne d'alimentation (3) en courant continu via un signal d'alimentation ayant une tension commandée par la sous-station en fonction d'un paramètre de tension, la ligne d'alimentation étant disposée le long d'une voie (2) et un ensemble de véhicule(s) (33, 34) circulant sur ladite voie étant propre à se raccorder électriquement à la ligne d'alimentation, chaque sous-station étant respectivement associée à un tronçon de la voie correspondant à sa zone de service en alimentation, **caractérisé en ce que** le procédé comporte les étapes suivantes :

- détermination des véhicules circulant actuellement dans le tronçon spécifiquement associé à ladite sous-station ;
- détermination de la tension d'alimentation courante, à leur point de raccordement à la ligne d'alimentation, de chacun desdits véhicules déterminés dans le tronçon ;
- détermination d'une valeur actualisée du paramètre de tension de ladite sous-station en fonction de ladite tension d'alimentation déterminée de chacun desdits véhicules actuellement localisés dans le tronçon respectif associé à ladite sous-station ;
- commande de réglage à ladite valeur actualisée ainsi déterminée du paramètre de tension de ladite sous-station.

2. Procédé d'adaptation dynamique du fonctionnement d'au moins une sous-station (122) de traction selon la revendication 1, selon lequel le tronçon de voie (Zt122) associée à ladite sous-station est le tronçon ayant pour extrémités un premier point d'extrémité (P121) et un second point d'extrémité (P123), tel que :

le premier point d'extrémité est le point de raccordement électrique à la ligne d'alimentation de la sous-station voisine la plus proche (121) de ladite sous-station selon un sens le long de ladite voie, et
le second point d'extrémité est le point de raccordement électrique à la ligne d'alimentation de la sous-station voisine la plus proche (123) de ladite sous-station selon le sens opposé le long de ladite voie s'il existe ou sinon une extrémité de la voie.

3. Procédé d'adaptation dynamique du fonctionnement d'au moins une sous-station (122) de traction selon la revendication 1 ou 2, selon lequel la valeur actualisée du paramètre de tension de ladite sous-station est déterminée en fonction de la différence, pour chacun desdits véhicules actuellement localisés dans le tronçon respectif associé à ladite sous-station, entre une valeur seuil de tension déclenchant une augmentation du paramètre de tension de ladite station et ladite tension d'alimentation courante dudit véhicule.

4. Procédé d'adaptation dynamique du fonctionnement d'au moins une sous-station (122) de traction selon l'une quelconque des revendications précédentes, selon lequel ledit paramètre de tension correspond à la tension à vide.

5. Procédé d'adaptation dynamique du fonctionnement d'au moins une sous-station de traction (122) selon l'une quelconque des revendications précédentes, selon lequel la valeur actualisée du paramètre de tension de ladite sous-station est déterminée à l'aide de la formule suivante :

$$U_0 = U_{00} + C.\Sigma_{i=1 \text{ à } n} \text{pos}(U_{th} - U_{tr,i})$$

où :

$U_0$ est la valeur actualisée du paramètre de tension déterminée ;
$U_{00}$ et C sont deux valeurs constantes ;
n est le nombre de véhicules localisés au sein du tronçon associé à ladite sous-station ;
$\text{pos}(U_{th} - U_{tr,i}) = 0$ si $U_{th} - U_{tr,i}$ est négatif, et $\text{pos}(U_{th} - U_{tr,i}) = U_{th} - U_{tr,i}$ sinon ;
$U_{th}$ est une valeur constante;
$U_{tr,i}$ est la valeur courante de tension d'alimentation courante à son point de raccordement à la ligne (3) d'alimentation, du ième véhicule, i = 1 à n, localisé au sein du tronçon associé à ladite sous-station.

6. Programme d'ordinateur comportant des instructions logicielles qui, lorsqu'elles sont exécutées par un ordinateur, mettent en œuvre un procédé selon l'une quelconque des revendications précédentes

7. Dispositif (60) d'adaptation dynamique du fonctionnement d'au moins une sous-station (122) de traction d'un ensemble de sous-station(s) de traction d'un système d'alimentation en puissance électrique (1) de véhicules électriques (33, 34), ladite sous-station étant adaptée pour transférer une puissance électrique à une ligne d'alimentation (3) en courant continu via un signal d'alimentation ayant une tension commandée par la sous-station en fonction d'un paramètre de tension et étant respectivement associée à un tronçon de la voie correspondant à sa zone de service en alimentation (Zt122), ledit dispositif d'adaptation étant **caractérisé en ce qu'**il est adapté pour déterminer les véhicules circulant actuellement dans le tronçon spécifiquement associé à ladite sous-station, pour déterminer la tension d'alimentation courante, à leur point de raccordement à la ligne d'alimentation, de chacun desdits véhicules déterminés dans le tronçon ; pour déterminer une valeur actualisée du paramètre de tension de ladite sous-station en fonction de ladite tension d'alimentation déterminée de chacun desdits véhicules actuellement localisés dans le tronçon respectif associé à ladite sous-station et pour commander un réglage à ladite valeur actualisée ainsi déterminée du paramètre de tension de ladite sous-station.

8. Dispositif (60) d'adaptation dynamique du fonctionnement d'au moins une sous-station (122) de traction selon la revendication 7, adapté pour considérer le tronçon de voie (Zt122) associée à ladite sous-station comme égal au tronçon ayant pour extrémités un premier point d'extrémité (P121) et un second point d'extrémité (P123), tel que :

le premier point d'extrémité est le point de raccordement électrique à la ligne d'alimentation de la sous-station voisine la plus proche (121) de ladite sous-station selon un sens le long de ladite voie et
le second point d'extrémité est le point de raccordement électrique à la ligne d'alimentation de la sous-station voisine la plus proche (123) de ladite sous-station selon le sens opposé le long de ladite voie s'il existe ou sinon une extrémité de la voie.

9. Dispositif (60) d'adaptation dynamique du fonctionnement d'au moins une sous-station (122) de traction selon la revendication 7 ou 8, adapté pour déterminer la valeur actualisée du paramètre de tension de ladite sous-station en fonction de la différence, pour chacun desdits véhicules actuellement localisés dans le tronçon respectif associé à ladite sous-station, entre une valeur seuil de tension déclenchant une augmentation du paramètre de tension de ladite station et ladite tension d'alimentation courante dudit véhicule.

10. Dispositif (60) d'adaptation dynamique du fonctionnement d'au moins une sous-station (122) de traction selon l'une quelconque des revendications 7 à 9, dans lequel ledit paramètre de tension correspond à la tension à vide.

**Patentansprüche**

1. Verfahren zur dynamischen Anpassung des Betriebs von zumindest einer Traktionsunterstation (121, 122) einer Gruppe einer Traktionsunterstation/von Traktionsunterstationen eines Systems zur Versorgung mit elektrischer Leistung (1) von elektrischen Fahrzeugen, wobei jede Unterstation angepasst ist, um eine elektrische Leistung zu einer Leitung zur Versorgung (3) mit Gleichstrom zu übertragen via ein Signal zur Versorgung, welches eine Spannung hat, welche mittels der Unterstation in Abhängigkeit von einem Spannungsparameter gesteuert wird, wobei die Leitung zur Versorgung entlang einer Fahrspur (2) angeordnet ist, und wobei eine Gruppe eines Fahrzeugs/von Fahrzeugen (33, 34), welche auf der besagten Fahrspur fahren, imstande sind, sich mit der Leitung zur Versorgung elektrisch zu verbinden, wobei jede Unterstation jeweilig mit einem Abschnitt der Fahrspur assoziiert ist, welcher zu ihrer Versorgungsdienstzone korrespondiert, **dadurch gekennzeichnet, dass** das Verfahren die folgenden Schritte aufweist:

- Ermitteln der Fahrzeuge, welche gegenwärtig in dem Abschnitt fahren, welcher spezifisch mit der besagten Unterstation assoziiert ist,
- Ermitteln der gegenwärtigen Versorgungsspannung an ihrem Verbindungspunkt mit der Leitung zur Versorgung von jedem der besagten in dem Abschnitt ermittelten Fahrzeuge,
- Ermitteln eines aktualisierten Werts des Spannungsparameters der besagten Unterstation in Abhängigkeit von der besagten ermittelten Versorgungsspannung von jedem der besagten Fahrzeuge, welche sich gegenwärtig in dem jeweiligen Abschnitt befinden, welcher mit der besagten Unterstation assoziiert ist,
- Steuern der Anpassung an den besagten aktualisierten sowie ermittelten Wert des Spannungsparameters der besagten Unterstation.

2. Verfahren zur dynamischen Anpassung des Betriebs von zumindest einer Traktionsunterstation (122) gemäß Anspruch 1, gemäß welchem der Fahrspur-Abschnitt (Zt122), welcher mit der besagten Unterstation assoziiert ist, der Abschnitt ist, welcher als Enden einen ersten Endpunkt (P121) und einen zweiten Endpunkt (P123) hat, sodass:

der erste Endpunkt der Punkt der elektrischen Verbindung mit der Leitung zur Versorgung der benachbarten Unterstation (121) ist, welche am nächsten zur besagten Unterstation in einer Richtung entlang der besagten Fahrspur ist, und
der zweite Endpunkt der Punkt der elektrischen Verbindung mit der Leitung zur Versorgung der benachbarten Unterstation (123) ist, welche am nächsten zur besagten Unterstation in der entgegengesetzten Richtung entlang der besagten Fahrspur ist, falls ein Ende der Fahrspur existiert oder nicht.

3. Verfahren zur dynamischen Anpassung des Betriebs von zumindest einer Traktionsunterstation (122) gemäß Anspruch 1 oder 2, gemäß welchem der aktualisierte Wert des Spannungsparameters der besagten Unterstation ermittelt wird in Abhängigkeit von der Differenz, für jedes der besagten Fahrzeuge, welche sich gegenwärtig in dem jeweiligen Abschnitt befinden, welcher mit der besagten Unterstation assoziiert ist, zwischen einem Spannungsschwellwert, welcher eine Vergrößerung des Spannungsparameters der besagten Station auslöst, und der besagten gegenwärtigen Versorgungsspannung des besagten Fahrzeugs.

4. Verfahren zur dynamischen Anpassung des Betriebs von zumindest einer Traktionsunterstation (122) gemäß irgendeinem der vorherigen Ansprüche, gemäß welchem der besagte Spannungsparameter zur Leerlaufspannung korrespondiert.

5. Verfahren zur dynamischen Anpassung des Betriebs von zumindest einer Traktionsunterstation (122) gemäß irgendeinem der vorherigen Ansprüche, gemäß welchem der aktualisierte Wert des Spannungsparameters der besagten Unterstation mit Hilfe der folgenden Formel ermittelt wird:

$$U_0 = U_{00} + C . \Sigma_{i=1 \text{ bis } n} \, pos(U_{th} - U_{tr,i}),$$

wobei:

$U_0$ der aktualisierte Wert des ermittelten Spannungsparameters ist,
$U_{00}$ und C zwei konstante Werte sind,
n die Anzahl der Fahrzeuge ist, welche sich innerhalb des Abschnitts befinden, welcher mit der besagten Unterstation assoziiert ist,
$pos(U_{th} - U_{tr,i}) = 0$, falls $U_{th} - U_{tr,i}$ negativ ist, und $pos(U_{th} - U_{tr,i}) = U_{th} - U_{tr,i}$ andernfalls,
$U_{th}$ ein konstanter Wert ist,
$U_{tr,i}$ der gegenwärtige Wert der gegenwärtigen Versorgungsspannung an ihrem Verbindungspunkt mit der Leitung (3) zur Versorgung ist, des i-ten Fahrzeugs, i = 1 bis n, welches sich innerhalb des Abschnitts befindet, welcher mit der besagten Unterstation assoziiert ist.

6. Computerprogramm, welches Softwareanweisungen aufweist, welche, wenn sie mittels eines Computers ausgeführt werden, ein Verfahren gemäß irgendeinem der vorherigen Ansprüche ausführen.

7. Vorrichtung (60) zur dynamischen Anpassung des Betriebs von zumindest einer Traktionsunterstation (122) einer Gruppe einer Traktionsunterstation/von Traktionsunterstationen eines Systems zur Versorgung mit elektrischer Leistung (1) von elektrischen Fahrzeugen (33, 34), wobei die besagte Unterstation angepasst ist, um eine elektrische Leistung zu einer Leitung zur Versorgung (3) mit Gleichstrom zu übertragen via ein Signal zur Versorgung, welches eine Spannung hat, welche mittels der Unterstation in Abhängigkeit von einem Spannungsparameter gesteuert wird, und welche jeweilig mit einem Abschnitt der Fahrspur assoziiert ist, welcher zu ihrer Versorgungsdienstzone (Zt122) korrespondiert, wobei die besagte Vorrichtung zur Versorgung **dadurch gekennzeichnet ist, dass** sie angepasst ist, um die Fahrzeuge zu ermitteln, welche gegenwärtig in dem Abschnitt fahren, welcher spezifisch mit der besagten Unterstation assoziiert ist, um die gegenwärtige Versorgungsspannung zu ermitteln, an ihrem Verbindungspunkt mit der Leitung zur Versorgung von jedem der besagten in dem Abschnitt ermittelten Fahrzeuge, um einen aktualisierten Wert des Spannungsparameters der besagten Unterstation zu ermitteln in Abhängigkeit von der besagten ermittelten Versorgungsspannung von jedem der besagten Fahrzeuge, welche sich gegenwärtig in dem jeweiligen Abschnitt befinden, welcher mit der besagten Unterstation assoziiert ist, und um eine Anpassung an den besagten aktualisierten sowie ermittelten Wert des Spannungsparameters der besagten Unterstation zu steuern.

8. Vorrichtung (60) zur dynamischen Anpassung des Betriebs von zumindest einer Traktionsunterstation (122) gemäß Anspruch 7, welche angepasst ist, um den Fahrspur-Abschnitt (Zt122), welcher mit der besagten Unterstation assoziiert ist, als gleich dem Abschnitt zu berücksichtigen, welcher als Enden einen ersten Endpunkt (P121) und einen zweiten Endpunkt (P123) hat, sodass:

der erste Endpunkt der Punkt der elektrischen Verbindung mit der Leitung zur Versorgung der benachbarten Unterstation (121) ist, welche am nächsten zur besagten Unterstation in einer Richtung entlang der besagten Fahrspur ist, und

der zweite Endpunkt der Punkt der elektrischen Verbindung mit der Leitung zur Versorgung der benachbarten Unterstation (123) ist, welche am nächsten zur besagten Unterstation in der entgegengesetzten Richtung entlang der besagten Fahrspur ist, falls ein Ende der Fahrspur existiert oder nicht.

9. Vorrichtung (60) zur dynamischen Anpassung des Betriebs von zumindest einer Traktionsunterstation (122) gemäß Anspruch 7 oder 8, welche angepasst ist, um den aktualisierten Wert des Spannungsparameters der besagten Unterstation zu ermitteln in Abhängigkeit von der Differenz, für jedes der besagten Fahrzeuge, welche sich gegenwärtig in dem jeweiligen Abschnitt befinden, welcher mit der besagten Unterstation assoziiert ist, zwischen einem Spannungsschwellwert, welcher eine Vergrößerung des Spannungsparameters der besagten Station auslöst, und der besagten gegenwärtigen Versorgungsspannung des besagten Fahrzeugs.

10. Vorrichtung (60) zur dynamischen Anpassung des Betriebs von zumindest einer Traktionsunterstation (122) gemäß irgendeinem der Ansprüche 7 bis 9, wobei der besagte Spannungsparameter zur Leerlaufspannung korrespondiert.

**Claims**

1. A method for dynamically adapting the operation of at least one traction substation (121, 122) of a railway vehicle electrical power supply system (1), each substation being adapted for transferring electrical power to a DC supply line (3) via a supply signal controlled by the substation as a function of a voltage parameter, the supply line being positioned along a track (2) and a set of vehicle(s) (33, 34) traveling on said track being able to connect electrically to the supply line, each substation respectively being associated with a segment of the track corresponding to its supply service zone, **characterized in that** the method includes the following steps:

   - determining vehicles currently circulating in the segment specifically associated with said substation;
   - determining the current supply voltage, at their connection point to the supply line, of each of said vehicles determined in the segment;
   - determining an updated value of the voltage parameter of said substation as a function of said determined supply voltage of each of said vehicles currently located in the respective segment associated with said substation;
   - controlling the setting of said updated value thus determined of the voltage parameter of said substation.

2. The method for dynamically adapting the operation of at least one traction substation (122) according to claim 1, wherein the track segment (Zt122) associated with said substation is the segment having, as ends, a first endpoint (P121) and a second endpoint (P123), such that:

   the first endpoint is the electrical connection point to the supply line of the adjacent substation closest (121) to said substation in a direction along said track, and
   the second endpoint is the electrical connection point to the supply line of the adjacent substation closest (123) to said substation in the opposite direction along said track if it exists or otherwise an end of the track.

3. The method for dynamically adapting the operation of at least one traction substation (122) according to claim 1 or 2, according to which the updated value of the voltage parameter of said substation is determined as a function of the difference, for each of said vehicles currently located in the respective segment associated with said substation, between a voltage threshold value triggering an increase of the voltage parameter of said station and said current supply voltage of said vehicle.

4. The method for dynamically adapting the operation of at least one traction substation (122) according to any one of the preceding claims, wherein said voltage parameter corresponds to the no-load voltage.

5. The method for dynamically adapting the operation of at least one traction substation (122) according to any one of the preceding claims, wherein the updated value of the voltage parameter of said substation is determined using the following formula:

$$U_0 = U_{00} + C . \Sigma_{i=1 \text{ à } n} \text{pos}(U_{th} - U_{tr,i})$$

where:

U$_0$ is the updated value of the determined voltage parameter;

U$_{00}$ and C are two constant values;

n is the number of vehicles located within the segment associated with said substation; pos($U_{th}$ - $U_{tr,i}$) = 0 if Uth - Utr,i is negative, and pos ($U_{th}$ - $Ut_{r,i}$) = $U_{th}$ - $U_{tr,i}$ otherwise;

$U_{th}$ is a constant value;

$U_{tr,i}$ is the current supply voltage current value at its connection point to the supply line (3), of the i$^{th}$ vehicle, i = 1 to n, located within the segment associated with said substation.

6.  A computer program comprising software instructions which, when executed by a computer, carry out a method according to any one of the preceding claims.

7.  A device (60) for dynamically adapting the operation of at least one traction substation (122) of a railway vehicle (33, 34) electrical power supply system (1), each substation being adapted for transferring electrical power to a DC supply line (3) via a supply signal controlled by the substation as a function of a voltage parameter, the supply line being positioned along a track and a set of vehicle(s) traveling on said track, said substation respectively being associated with a segment of the track corresponding to its supply service zone (Zt122), said adaptation device being **characterized in that** it is adapted for determining the vehicles currently traveling in the segment specifically associated with said substation, in order to determine the current supply voltage, at their connection point to the supply line, of each of said determined vehicles in the segment; in order to determine an updated value of the voltage parameter of said substation as a function of said determined supply voltage of each of said vehicles currently located in the respective segment associated with said substation and to command an adjustment of said updated value thus determined of the voltage parameter of said substation.

8.  The device (60) for dynamically adapting the operation of at least one traction substation (122) according to claim 7, adapted for considering the track segment (Zt122) associated with said substation as being equal to the segment having, as ends, a first endpoint (P121) and a second endpoint (P123), such that:

    the first endpoint is the electrical connection point to the supply line of the adjacent substation closest (121) to said substation in a direction along said track, and

    the second endpoint is the electrical connection point to the supply line of the adjacent substation closest (123) to said substation in the opposite direction along said track if it exists or otherwise an end of the track.

9.  The device (60) for dynamically adapting the operation of at least one traction substation (122) according to claim 7 or 8, adapted for determining the updated value of the voltage parameter of said substation as a function of the difference, for each of said vehicles currently located in the respective segment associated with said substation, between a voltage threshold value triggering an increase of the voltage parameter of said station and said current supply voltage of said vehicle.

10. The device (60) for dynamically adapting the operation of at least one traction substation (122) according to any one of claims 7 to 9, wherein said voltage parameter corresponds to the no-load voltage.

EP 3 715 172 B1

FIG.1

EP 3 715 172 B1

FIG.2

EP 3 715 172 B1

100

| ACQ. pos & V |
101

$\downarrow$

| CALC. $U_0$ |
102

$\downarrow$

| COMD ($U_0$) |
103

<u>FIG.3</u>

**EP 3 715 172 B1**

**RÉFÉRENCES CITÉES DANS LA DESCRIPTION**

**Documents brevets cités dans la description**

- EP 1985490 A1
- US 2015027838 A1
- FR 2873332